# EUROPEAN PATENT SPECIFICATION

(11) **EP 4 015 667 B1**
(45) Date of publication and mention of the grant of the patent: **25.03.2026**
(21) Application number: 20900510.7
(22) Date of filing: 15.04.2020
(51) Int. Cl.: C22C 38/02, C22C 38/04, C22C 38/06, C22C 38/22, C22C 38/24, C22C 38/32, C22C 38/60, C21D 1/26, C21C 7/10, C21C 7/06, C21D 8/02, C21D 6/00, C21D 9/52, C22C 38/00, F16C 33/62, F16C 33/64, C21D 1/30, C21D 1/60, C21D 1/84, C21D 9/00

(54) **METHOD FOR PRODUCING A STEEL FOR BALL SCREW BEARING**
HERSTELLUNGSVERFAHREN FÜR STAHL FÜR KUGELSPINDELLAGER
PROCÉDÉ DE FABRICATION D'UN ACIER POUR PALIER À ROULEMENT À BILLES

(30) Priority: 09.12.2019 CN 201911249147
(43) Date of publication of application: 22.06.2022
(73) Proprietor: Jiangyin Xingcheng Special Steel Works Co., Ltd, Jiangyin, Jiangsu 214434 (CN)
(72) Inventor: CHEN, Min, Jiangyin, Jiangsu 214434 (CN); GENG, Ke, Jiangyin, Jiangsu 214434 (CN); YIN, Qing, Jiangyin, Jiangsu 214434 (CN); LI, Feng, Jiangyin, Jiangsu 214434 (CN); LI, Guozhong, Jiangyin, Jiangsu 214434 (CN); XU, Xiaohong, Jiangyin, Jiangsu 214434 (CN); BAI, Yun, Jiangyin, Jiangsu 214434 (CN); WU, Xiaolin, Jiangyin, Jiangsu 214434 (CN)
(74) Representative: Huang, Liwei
(86) International application number: PCT/CN2020/084957
(87) International publication number: WO 2021/114536

(56) References cited:
- EP-A1- 0 742 288
- EP-A1- 3 176 278
- EP-A1- 3 480 335
- EP-A1- 3 505 652
- WO-A1-2014/027463
- CN-A- 108 893 674
- CN-A- 109 182 901
- CN-A- 109 252 096
- CN-A- 110 983 178
- CN-B- 106 574 338
- JP-A- 2010 168 624

## Description

### Technical field

The invention relates to a method for producing a steel for ball screw bearing.

### Background art

Ball screw pair is one of the common transmission devices in transmission machinery, which uses the rolling of ball between screw and nut to realize power transmission and motion conversion at the same time. At the same time, it has the characteristics of high precision, high efficiency and reversibility. It has become the key executive component in the driving process of all kinds of NC machine tools, automatic machinery and machining centers. It is widely used in the fields of automobile, machinery, nuclear industry, aviation, aerospace and so on. Rolling screw pair is usually composed of four parts: screw bearing, ball, nut and ball circulating return device.

As the key component of the ball screw pair, the ball screw bearing, in the aspects of the surface hardness and wear resistance, are important factors affecting the accuracy uniformity of the ball screw pair.

According to the service conditions of ball screw bearing, high requirements are also put forward for the raw material steel of ball screw bearing. The steel for ball screw bearing must have the following properties: "high elastic strength, yield strength and toughness, and sufficient wear resistance". In addition, because the non-metallic inclusions in the steel will destroy the continuity and uniformity of the metal. According to the service conditions of the ball screw bearing, under the action of alternating stress, the inclusions are easy to cause stress concentration. In this case, it become the source of fatigue cracks, easily form cracks and reduce the service life of the guide rail. Therefore, in order to improve the service life of the final product, The purity of the steel used for ball screw bearings must be improved and the non-metallic inclusions in the steel must be reduced as much as possible.

The common materials of ball screw bearings are high carbon chromium bearing steel, medium carbon steel and carburized steel. High carbon bearing steels, such as GCr15 and GCr15SiMn, are used in the production of ball screw bearings. After pretreatment, they are quenched at the working part, which can basically meet the requirements of high strength, high hardness and wear resistance required by the working part. However, this kind of bearing steel can only barely meet the performance requirements of contact stiffness, because the ball screw bearings are very different from traditional bearings. For example, HRC60's hardened layer depth, gradient and uniformity in the whole process are difficult to control, bending deformation after quenching is difficult to straighten, axial expansion deformation is difficult to control and other defects affect product quality of the final ball screw bearing, and even lead to batch scrapping, which has become a bottleneck restricting the development of high-precision machinery production industry. Carburized bearing steel is mainly used under the condition of high surface contact fatigue strength and high center toughness. After carburizing and quenching, this kind of steel can reach more than 60HRC on its surface hardness, has certain wear resistance and strength, and its service performance is almost the same as that of high carbon chromium bearing steel. However, due to the need for carburization, the production process is complex and the production cost is high, which is not conducive to spread and distribution. After being surface induced, heated and quenched, the medium carbon steel mainly uses the principle of electromagnetic induction to quickly heat the ball screw bearing surface to the quenching temperature in the form of eddy current, and then cools sharply to form a surface hardening layer at a certain thickness, while the center still maintains in the original microstructure. Therefore, it can meet the requirements of comprehensive mechanical properties of ball screw bearing with high hardness and wear resistance on the surface and high toughness in the center.

At present, the medium carbon ball screw bearing steel used at home and abroad is mainly 50CrMo, which has high alloy element content and belongs to ultra-high strength alloy bonded structural steel. It has high strength and toughness after quenching and tempering. However, due to high alloy content and high cost. Moreover, due to high alloy content and high hardenability of steel, bainite structure is easy to be produced after quenching and tempering, and deformation is easy to occur after subsequent heat treatment.

EP 0742288A1 relates to a long-life induction-hardened bearing steel, wherein Mg is added in a proper amount, so that the oxide composition is converted from Al2O3 to MgO·Al2O3 or MgO, so that the nonmetallic inclusions do not easily become aggregates, and a fine dispersion thereof is achieved.

Besides, EP 3505652A1 discloses a method of manufacturing a high-hardenability, medium-carbon, low-alloy round steel.

### Detailed description of the invention

Based on medium carbon steel, the invention develops a steel for ball screw bearing, which is processed consequently with high hardness (i.e., wear resistance) and high strength, and the center has good toughness to meet the service requirements of ball screw bearing.

The invention is set out in the appended set of claims.

The technical scheme adopted by the invention is: a steel for ball screw bearing, the alloy constituents is C: 0.45-0.60%, Si: 0.15-0.40%, Mn: 0.50-0.80%, Cr: 0.15-0.40%, B: 0.002-0.006%, V: 0.02-0.07%, S ≤ 0.015%, P ≤ 0.025%, Mo ≤ 0.10%, Al ≤ 0.08%, Ca ≤ 0.0010%, O ≤ 0.0010%, As ≤ 0.04%, Sn ≤ 0.03%,Sb ≤ 0.005%, Pb ≤ 0.002%, the balance is Fe and unavoidable impurities.

The steel for ball screw bearing of the invention is based on medium carbon steel, and the alloy elements include Mn, Cr, B and V. The addition amount of the alloy is controlled to significantly reduce the cost. The design basis of each element in the constituents is as follows

### 1) Determination of C content

C is the most economical and basic strengthening element in steel. The strength of steel can be significantly improved through solid solution strengthening and precipitation strengthening, but too high C will have an adverse impact on the toughness and ductility of steel. The C content range of the invention is determined to be 0.45-0.60%, and the steel related to the invention belongs to the category of medium carbon steel.

### 2) Determination of Si content

Si is a deoxidizing element in steel and improves the hardness and strength of steel in the form of solid solution strengthening. In addition, Si reduces the oxidation during friction heating and improves the cold deformation hardening rate of steel, so as to improve the wear resistance of the material. However, when the Si content is high, the toughness of the steel decreases, and Si increases the overheating sensitivity, crack and decarburization tendency in the steel. The invention controls the Si content at 0.15-0.40%.

### 3) Determination of Mn content

As a deoxidizing element in steelmaking process, Mn is an effective element for strengthening steel and plays a role of solid solution strengthening. Moreover, Mn can improve the hardenability and hot workability of steel. Mn can eliminate the influence of S (sulfur): Mn can form MnS with high melting point with S in iron and steel smelting, so as to weaken and eliminate the adverse effect of S. However, high Mn content will reduce the toughness of steel. The Mn content of the invention is controlled at 0.50-0.80%.

### 4) Determination of Cr content

Cr is a carbide forming element, which can improve the hardenability, wear resistance and corrosion resistance of the steel. But if the Cr content is too high, it forms easily large carbides combined with the carbon in the steel. This insoluble carbide reduces the toughness of the steel and the service life of the bearing. The Cr content range of the invention is determined to be 0.15-0.40%.

### 5) Determination of B content

B can improve the hardenability of the steel, improve the high-temperature strength of the steel, and strengthen the grain boundary in the steel. The content of B in the invention is determined as 0.002-0.006%.

### 6) Determination of V content

Vanadium is an excellent deoxidizer for steel. Vanadium can also refine grains and improve the strength and toughness of steel. The range of V content of the invention is determined as 0.02-0.07%.

### 7) Determination of Mo content

Molybdenum can refine the grain of steel, improve hardenability and thermal strength, and maintain sufficient strength and creep resistance at high temperature. Adding molybdenum to steel can improve mechanical properties and inhibit the brittleness of alloy steel caused by tempering. However, molybdenum is a ferrite forming element, and ferrite is easy to appear when molybdenum content is high in δ Phase or other brittle phase to reduce toughness. In the invention, the range of Mo content is determined to be ≤ 0.10%.

### 8) Determination of Al content

Al is added as a deoxidizing element in steel. In addition to reducing dissolved oxygen in molten steel, Al and N form dispersed fine aluminum nitride inclusions, which can refine grains. However, when the Al content is too high, brittle inclusions such as large particle Al₂O₃ are easy to form during molten steel melting, which reduces the purity of molten steel and affects the service life of finished products. The range of Al content in the invention is determined to be ≤ 0.08%.

### 9) Determination of Ca content

Ca content will increase the number and size of point oxides in steel. At the same time, due to the high hardness and poor plasticity, point oxides do not deform when the steel is deformed. Thus, it is easy to form voids at the interface, which worsens performance of the steel. The Ca content range of the invention is determined to be ≤ 0.001%.

### 10) Determination of O content

The oxygen content represents the total amount of oxide inclusions, and oxide brittle inclusions limits and affects the service life of finished products. A large number of tests show that the reduction of oxygen content is significantly beneficial to improve the purity of steel, especially to reduce the content of oxide brittle inclusions of steel. The oxygen content range of the invention is determined to be ≤ 0.0010%.

### 11) Determination of P, S content

P seriously causes segregation during solidification in steel, P dissolves in ferrite, distorts and coarsens grains, and increases cold brittleness. The P content range of the invention is determined to be ≤ 0.025%. S makes the steel thermally brittle and reduces the ductility and toughness of the steel, but S can improve the cutting performance of the steel. The range of S content in the invention is determined to be ≤ 0.015%.

### 12) Determination of As, Sn, Sb, Pb content

As, Sn, Sb, Pb and other trace elements belong to low melting point non-ferrous metals and exist in steel, causing soft spots and uneven hardness on the surface of parts. Therefore, they are regarded as harmful elements in steel. The content range of these elements in the invention is determined as: As ≤ 0.04%, Sn ≤ 0.03%, Sb ≤ 0.005%, Pb ≤ 0.002%.

The invention provides a production method of steel for ball screw bearing as defined in the claims.

The C content at the end point of primary smelting all be controlled at 0.10-0.25%, and the P at the end point shall be ≤ 0.020%. The O content shall be indirectly controlled below 100ppm through the control of C content by using the relationship between C and O in molten steel.

The production method has the following characteristics:
1. Strengthen the deoxidation in the refining process, make use of the good dynamic conditions in the molten steel, carry out centralized early deoxidation and vacuum degassing treatment, make the non-metallic inclusions float fully and control the low gas content. After vacuum degassing, carry out soft argon blowing for a long time to ensure the full floating of inclusions. At the same time, protect against oxidation in the whole process of continuous casting to reduce the number of inclusions in steel. In addition, select control technology by using high-quality refractory materials to reduce the molten steel pollution caused by foreign inclusions, strengthen the control of the production process and improve the purity of molten steel.
2. Adopts technologies of electromagnetic stirring and soft reduction in the continuous casting process, and pour at low overheat to effectively improve and reduce the constituents segregation of the continuous casting billet. In particular, after adding advanced equipment such as electromagnetic stirring and soft reduction at the solidification end, the compactness of the solidification structure of the billet has been improved, and the center porosity and shrinkage cavity of billet have been effectively controlled, The secondary dendrite arm spacing is significantly improved, the center equiaxed grain rate is significantly improved, and the grain is refined, which significantly improves the quality of the billet and reduces the constituents segregation.
3. Continuous casting billet and intermediate billet are heated at high temperature respectively to ensure uniform heating of billet and improve steel segregation.
4. After quenching and tempering treatment, rolled steel is carried out for stress relief annealing to eliminate the internal stress of and prevent cracking. The bar products after heat treatment shall be subject to subsequent descaling + surface flaw detection to ensure the surface quality of steel.

Compared with the existing arts, the invention has the advantages of:
1) Through the reasonable design of chemical constituents, especially the addition of V, B, etc., the steel of the invention can not only ensure that the surface has sufficient hardness and good wear resistance, but also have certain toughness in the center, which can significantly improve the service life of the product. 2) Due to the good uniformity control of the steel, the heat treatment deformation of the product after heat treatment is small and the dimensional accuracy is high, which can meet the use requirements of the ball screw bearing. 3) The steel of the invention detects the internal quality through water immersion high-frequency flaw detection, which can ensure the reliability of the service fatigue life of the ball screw bearing.

The bar of the application has uniform structure and sorbite structure, so it is not easy to deform due to uneven structure or multiphase structure during subsequent heat treatment, and the dimensional accuracy is high. Compared with other medium carbon bearing steels with metallographic structure, the product of the invention has small heat treatment deformation and high dimensional accuracy after heat treatment.

The properties of the bearing steel of the application meet: the surface hardness of the bar meets 220-260HBW, and the metallographic structure of the bar is sorbite structure. The austenite grain size of the bar is ≥ grade 7; Bar yield strength is 600-800MPa, with tensile strength of 800-900MPa, elongation ≥ 15%; The toughness of bar is characterized by yield strength and elongation.

Non-metallic inclusions shall be rated according to method A in GB/T 10561, meeting Group A fine type ≤ 1.5; Group A coarse type ≤ 1.0; Group B fine type ≤ 1.5; Group B coarse type ≤ 1.0; Group C fine type = 0; Group C coarse type = 0; Group D fine type ≤ 1.0; Group D coarse type ≤ 1.0; Ds ≤ 1.5; SEP 1927 is used to detect flaws under water immersion by high frequency ultrasound, and the detected length of flaws shall not exceed 5mm.

### Description of the Attached Drawings

Fig. 1 is a metallographic structure diagram of a bar in embodiment 1 of the present invention;
Fig. 2 is a metallographic structure diagram of a bar in embodiment 2 of the present invention;
Fig. 3 is a metallographic structure diagram of a bar in embodiment 3 of the present invention;
Fig. 4 is a metallographic structure diagram of a bar in a comparative example of the present invention.

### Detailed description of embodiments

The invention is described in further detail below in combination with embodiments. The embodiments below are exemplary and are intended to explain the invention, but cannot be understood as limitations on the invention.

The production process of the steel for ball screw bearing of the invention: primary refining in electric furnace or converter - LF external refining - VD or RH vacuum degassing - continuous casting - cogging the continuous casting billet into intermediate billet - heating and rolling of intermediate billet - finishing - quenching and tempering heat treatment - polishing - Warehousing of parts.

Molten steel smelting: during smelting, select high-quality molten iron and scrap, select high-quality deoxidizer and refractory materials. In the primary refining production process, the end point C is controlled at 0.10-0.25% and the end point P is required to be ≤ 0.020%. The O content is indirectly controlled below 100ppm through the control of C content by using the relationship between C and O in molten steel. Then carry out LF refining outside the furnace. Deoxidation should continue to be strengthened during LF refining. SiC powder should be added to the slag surface in batches to carry out diffusion deoxidation. At the same time, Al wires should be fed to carry out precipitation deoxidation to form white slag as soon as possible and keep the white slag for more than 25min. Before LF refining, add B iron and blow argon for 3min, and then send it to vacuum degassing treatment. During vacuum treatment, the time below 133Pa should be more than 10min, after vacuum is broken, blow argon and soft blow for more than 20min to ensure full floating of non-metallic inclusions.

Billet obtained by continuous casting: continuous casting to produce square billet sized 390mm×510mm and above, the overheat of tundish shall be controlled at 15-35°C, the casting speed shall be 0.45-0.75m/min, and the amount of secondary cooling water for continuous casting shall be 0.10-0.30L/kg. In order to control material segregation, continuous casting adopts advanced equipment and processes such as electromagnetic stirring and soft reduction.

See Table 1 for the chemical constituents (wt%) of some Reference Examples (not being part of the present invention) and comparative examples.

**Table 1**

| | Embodiment | C | Si | Mn | P | S | Cr | B | V |
|---|---|---|---|---|---|---|---|---|---|
| Reference Example | 1 | 0.53 | 0.25 | 0.62 | 0.014 | 0.002 | 0.24 | 0.0035 | 0.035 |
| Reference Example | 2 | 0.52 | 0.24 | 0.64 | 0.010 | 0.003 | 0.22 | 0.0037 | 0.038 |
| Reference Example | 3 | 0.54 | 0.25 | 0.63 | 0.015 | 0.002 | 0.24 | 0.0033 | 0.036 |
| Comparative examples | 50CrMo | 0.51 | 0.27 | 0.78 | 0.017 | 0.005 | 1.10 | 0.0003 | 0.003 |

**Table 1 (Continued)**

| | Embodiment | Mo | As | Sn | Sb | Pb | Ca | O |
|---|---|---|---|---|---|---|---|---|
| Reference Example | 1 | 0.02 | 0.0040 | 0.0023 | 0.0010 | 0.001 | 0.0001 | 0.0007 |
| Reference Example | 2 | 0.02 | 0.0033 | 0.0017 | 0.0007 | 0.001 | 0.0001 | 0.0006 |
| Reference Example | 3 | 0.03 | 0.0021 | 0.0025 | 0.0009 | 0.001 | 0.0002 | 0.0007 |
| Comparative examples | 50CrMo | 0.18 | 0.0020 | 0.0015 | 0.0008 | 0.001 | 0.0002 | 0.0010 |

| | | | | | | | | |
|---|---|---|---|---|---|---|---|---|
| Note: O shall be inspected on finished products | | | | | | | | |

Cogging: send the continuous casting billet to the heating furnace for heating and billet cogging to 200mm×200mm-300mm×300 mm intermediate billet, the temperature of casting billet entering the furnace shall be greater than 600°C. After rolling, it shall be cooled slowly to prevent cracking due to excessive stress of intermediate billet. The embodiment of continuous casting billet cogging & rolling and subsequent cooling process is shown in Table 2 below.

**Table 2**

| Serial number | Heating process | | Rolling process | | Cooling process | |
|---|---|---|---|---|---|---|
| | Heating temperature (°C) | Heating time (h) | Start rolling temperature (°C) | Final rolling temperature (°C) | Pit temperature (°C) | Pit slow cooling time (h) |
| 1 | 1220 | 3h20min | 1120 | 970 | 510 | 55 |
| 2 | 1225 | 3h25min | 1115 | 965 | 516 | 62 |
| 3 | 1230 | 3h35min | 1110 | 969 | 506 | 61 |

Rolling: The intermediate billet is sent to the heating furnace for heating: The temperature of the preheating is controlled at 600-900°C, and the temperature of the heating is controlled at 1000-1150°C, The temperature of the soaking is controlled at 1100-1200°C. In order to ensure that the billet is fully and evenly heated, the total heating time is more than 2 hours. The specific rolling process is as follows: The rolling start temperature shall be controlled at 1000°C-1100°C, and the final rolling temperature shall be above 950°C. For he rolled bars ϕ of 20-80mm, it is subject to stack cooling for bars of diameter ϕ ≤ 70mm, or slow cooling in pit for more than 24hours for bars of diameter ϕ > 70mm. So that the carbide or nitride points in the steel are fine, uniform and fully precipitated, so as to refine the grain and prevent the mixed crystal of the steel. Then, the target bar product is prepared through subsequent straightening and flaw detection.

Then the above finished and qualified steel shall be subject to quenching and tempering treatment, in which the quenching heating temperature is 850-950°C, the furnace time is 100-300min. The quenching ring water quenching shall be used, and the water temperature shall be controlled at 20-30°C. The tempering heating temperature is 550-650°C, the furnace time is 200-300min, and the air shall be cooled to the room temperature after exiting the furnace. After quenching and tempering, the structure of the steel plate is sorbite.

The bar products after heat treatment shall be subject to subsequent descaling + surface flaw detection, in which the amount of unilateral descaling shall not be less than 0.5mm, and the final parts shall be put into warehouse.

The properties of the products produced in examples 1-3 are tested. The non-metallic inclusions, mechanical properties, hardness, grain size, microstructure and high-frequency flaw detection results are shown in table 3-6.

See Table 3 for the inclusions of steel in various embodiments and comparative examples

**Table 3**

| | Embod iment | A thin series inclusion | A thick series inclusion | B thin series inclusion | B thick series inclusion | C thin series inclusion | C thick series inclusion | D thin series inclusion | D thick series inclusion | DS inclusion |
|---|---|---|---|---|---|---|---|---|---|---|
| Reference Example | 1 | 0-0.5 | 0-0.5 | 0-1.0 | 0-0.5 | 0 | 0 | 0-0.5 | 0-0.5 | 0.5-1.0 |
| Reference Example | 2 | 0-0.5 | 0-0.5 | 0-0.5 | 0 | 0 | 0 | 0-1.0 | 0-0.5 | 0.5-0.5 |
| Reference Example | 3 | 0-0.5 | 0-0.5 | 0-0.5 | 0 | 0 | 0 | 0-1.0 | 0-0.5 | 0-1.0 |
| Comparati ve examples | 50CrM o | 0-1.0 | 0-0.5 | 0.5-1.5 | 0-1.0 | 0 | 0 | 0-2.0 | 0-1.0 | 0-2.0 |

See Table 4 for the hardness and mechanical property data of the steel in various embodiments and comparative examples

**Table 4**

| | Embodiment | Hardness (HBW) | Yield strength (MPa) | Tensile strength (MPa) | Elongation (%) |
|---|---|---|---|---|---|
| Reference Example | 1 | 247 | 680 | 878 | 18.5 |
| Reference Example | 2 | 253 | 695 | 880 | 18 |
| Reference Example | 3 | 245 | 677 | 885 | 18.5 |
| Comparative examples | 50CrMo | 256 | 705 | 905 | 18.5 |

See Table 5 for the grain size data of steel in various embodiments and comparative examples

**Table 5**

| | Embodiment | Quenched and tempered metallographic structure | Grain size (Grade) |
|---|---|---|---|
| Reference Example | 1 | Sorbite | 7 |
| Reference Example | 2 | Sorbite | 7 |
| Reference Example | 3 | Sorbite | 7 |
| Comparative examples | 50CrMo | Bainite + sorbite | 7 |

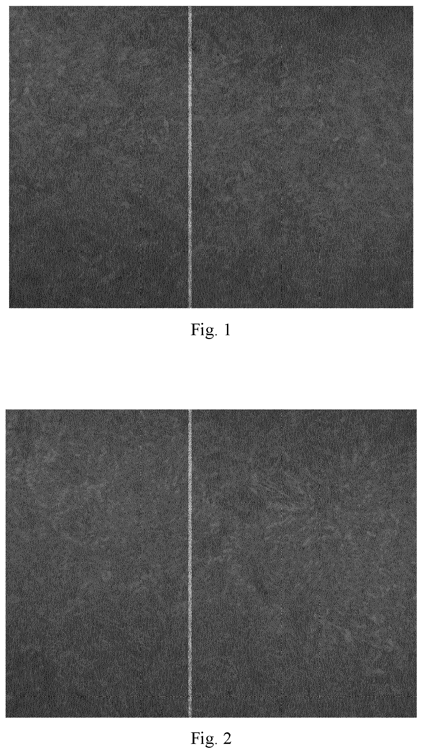

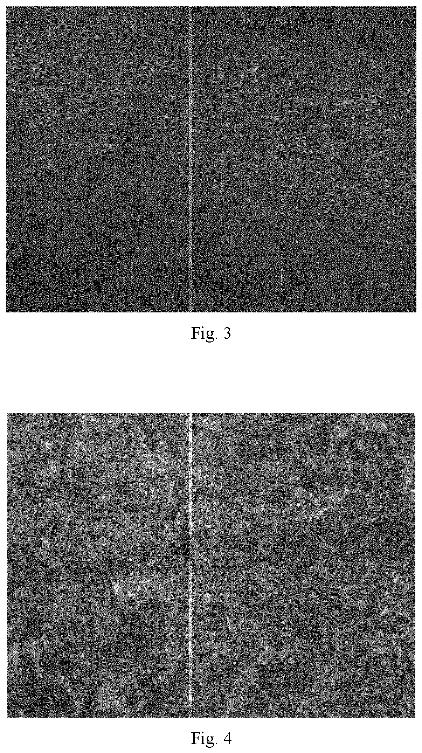

Refer to Fig. 1-4 for the quenched and tempered structure in various embodiments and comparative examples

The metallographic structure is sorbite in embodiment 1-3, and bainite + sorbite in comparative example. Because alloy element content in comparative example is high, and bainite is easy to appear after quenching and tempering.

See Table 6 for water immersion high frequency flaw detection data of steel in each embodiment

**Table 6**

| | Embodiment | Defect length detected by water immersion high frequency flaw detection (mm) |
|---|---|---|
| Reference Example | 1 | 0 |
| Reference Example | 2 | 0 |
| Reference Example | 3 | 0 |
| Comparative examples | 50CrMo | 3mm |

According to the test results, after V and B microalloying adjustment, on the premise of significantly reducing the alloy elements Cr and Mo, the mechanical properties of the reference examples are slightly lower than that of the comparative steel, but it can also fully meet the requirements of the steel for ball screw bearing, The structure of the reference example after quenching and tempering treatment is better than that of the comparative steel (bainite structure exists in the comparative steel), and the purity control level of the reference example is also better than that of the comparative steel. The Reference Examples are Not part of the Invention.

## Claims

1. A method for producing a steel for ball screw bearing,
wherein the steel contains following alloy constituents by mass percentage, C: 0.45-0.60%, Si: 0.15-0.40%, Mn: 0.50-0.80%, Cr: 0.15-0.40%, B: 0.002-0.006%, V: 0.02-0.07%, S ≤ 0.015%, P ≤ 0.025%, Mo ≤ 0.10%, Al ≤ 0.08%, Ca ≤ 0.0010%, O ≤ 0.0010%, As ≤ 0.04%, Sn ≤ 0.03%, Sb ≤ 0.005%, Pb ≤ 0.002%, the balance is Fe and unavoidable impurities;
wherein the steel meets following properties: when the steel is a bar, surface hardness of the bar meets 220-260 HBW, metallographic structure of the bar is sorbite structure, and austenite grain size of the bar is ≥ grade 7; yield strength of the bar is 600-800 MPa, tensile strength is 800-900 MPa, and elongation is ≥ 15%;
the method comprises following steps:
(1) Molten steel smelting: primary refining in an electric furnace or a converter - LF refining outside the furnace - VD or RH vacuum degassing,
in the process of LF refining, strengthening deoxidization, adding SiC powders in batches to carry out diffusion deoxidization, feeding Al wires to carry out precipitation and deoxidization, to form white slags as soon as possible, and maintaining white slags for more than 25 min; adding B iron before the LF refining ends, and softly blowing argon for more than 3 min;
wherein the C content at an end point of primary smelting is controlled at 0.10-0.25%, and the P at the end point is ≤ 0.020%, the O content is indirectly controlled to be below 100 ppm through the control of C content by using the relationship between C and O in molten steel;
during VD/RH vacuum degassing, when the vacuum degree is below 133 Pa, the holding time is more than 10 min; after the vacuum is broken, blowing argon and softly blowing for more than 20 min;
(2) Billet casting: casting molten steel into billet;
(3) Billet cogging: cogging the billet into an intermediate billet, feeding the billet to a heating furnace for heating, the temperature of billet feeding is greater than 600°C, the heating temperature is 1200°C-1240°C, and the total heating time is not less than 3 hours, a start rolling temperature is 1050-1150°C, and a final rolling temperature is not less than 900°C, the rolling compression ratio is ≥ 2, slowly cooling after rolling;
(4) Rolling: heating the intermediate billet in a furnace for austenitizing, a rolling start-up temperature is controlled at 1000°C-1100°C, and a final rolling temperature is not lower than 950°C, the rolling compression ratio is ≥ 6, so as to obtain bars with a diameter ϕ ≤ 70mm, the bars are stacked for cooling, and slowly cooled in a pit for more than 24 hours:
(5) Finishing and straightening;
(6) Quenching and tempering treatment: quenching + tempering, in which the quenching heating temperature is 850-950°C, the furnace time is 100-300 min, water quenching with a quenching ring is used, and the water temperature is controlled at 20-30°C; the tempering heating temperature is 550-650°C, the furnace time is 200-300 min, removing out of the furnace, and then cooling in air to room temperature;
(7) Annealing: stress relief annealing is carried out to eliminate internal stresses after quenching and tempering, the annealing temperature is 400-500 °C and the holding time is ≥ 3h, cooling to room temperature in the furnace, and then removing out of the furnace.
(8) Descaling + detecting surface flaws.

2. The method for producing the steel for ball screw bearing according to claim 1, wherein in step (1) molten steel smelting, high-quality molten iron or scrap steel is used to reduce contents of harmful elements in molten steel.

3. The method for producing the steel for ball screw bearing according to claim 1, wherein the step (2) is to continuously cast the molten steel into a square billet, the continuous casting process adopts electromagnetic stirring and soft reduction technology, and adopts low superheat pouring, the superheat of tundish is 15-35°C, the continuous casting speed is 0.45-0.75 m/min, and the amount of secondary cooling water for continuous casting is 0.10-0.30 L/kg.

4. The method for producing the steel for ball screw bearing according to claim 1, wherein after the square billet is rolled into an intermediate billet in step (3), it enters the pit for slow cooling, the pit temperature is not less than 500°C, and the slow cooling time is more than 48 hours.

5. The method according to claim 1, wherein in step (4) heating the intermediate billet in the furnace: the temperature of preheating section is controlled at 600-900°C, the temperature of heating section is controlled at 1000-1150°C, and the temperature of soaking section is controlled at 1100-1200°C; in order to ensure that the billet is fully and evenly heated, the total heating time is more than 2 hours.

## Patentansprüche

1. Herstellungsverfahren für Stahl für Kugelspindellager,
wobei der Stahl folgende Legierungsbestandteile in Masseprozent enthält, C: 0,45-0,60 %, Si: 0,15-0,40 %, Mn: 0,50-0,80 %, Cr: 0,15-0,40 %, B: 0,002-0,006 %, V: 0,02-0,07 %, S ≤ 0,015 %, P ≤ 0,025 %, Mo ≤ 0,10 %, Al ≤ 0,08 %, Ca ≤ 0,0010 %, O ≤ 0,0010 %, As ≤ 0,04 %, Sn ≤ 0,03 %, Sb ≤ 0,005 %, Pb ≤ 0,002 %, der Rest Fe und unvermeidbare Verunreinigungen sind;
wobei der Stahl die folgenden Eigenschaften erfüllt: wenn der Stahl ein Stab ist, erfüllt die Oberflächenhärte des Stabs 220-260 HBW, ist die metallographische Struktur des Stabs eine Sorbitstruktur und lautet die Austenitkorngröße des Stabs ≥ Grad 7; die Streckgrenze des Stabs beträgt 600-800 MPa, die Zugfestigkeit beträgt 800-900 MPa und die Dehnung beträgt ≥ 15 %;
das Verfahren folgende Schritte umfasst:
(1) Schmelzen von geschmolzenem Stahl: primäres Raffinieren in einem Elektroofen oder einem Konverter - LF-Raffinieren außerhalb des Ofens - VD- oder RH-Vakuumentgasung,
bei dem Prozess des LF-Raffinierens, Verstärkung der Desoxidation, Zugeben von SiC-Pulvern in Chargen zur Durchführung der Diffusionsdesoxidation, Einspeisen von Al-Drähten zur Durchführung der Ausfällung und Desoxidation, um so schnell wie möglich weiße Schlacken zu bilden, und Aufrechterhaltung der weißen Schlacken für mehr als 25 Min.; Zugeben von B-Eisen, bevor das LF-Raffinieren endet, und behutsames Blasen von Argon für mehr als 3 Min.;
wobei der C-Gehalt an einem Endpunkt des primären Schmelzens auf 0,10-0,25 % geregelt wird und das P an dem Endpunkt ≤ 0,020 % beträgt, der O-Gehalt indirekt durch die Regelung des C-Gehalts auf unterhalb von 100 ppm geregelt wird, indem die Beziehung zwischen C und O in geschmolzenem Stahl verwendet wird;
während der VD/RH-Vakuumentgasung, wenn der Vakuumgrad unterhalb von 133 Pa liegt, beträgt die Haltezeit mehr als 10 Min.; nach Unterbrechung des Vakuums, Blasen von Argon und behutsames Blasen für mehr als 20 Min.;
(2) Knüppelstranggießen: Gießen von geschmolzenem Stahl zu Knüppeln;
(3) Knüppelstrecken: Strecken des Knüppels zu einem Zwischenknüppel, Einspeisen des Knüppels in einem Erwärmungsofen zum Erwärmen, die Temperatur der Knüppeleinspeisung ist größer als 600 °C, die Erwärmungstemperatur beträgt 1200 °C-1240 °C und die Gesamterwärmungszeit beträgt nicht weniger als 3 Stunden, eine Startwalztemperatur beträgt 1050-1150 °C und eine Endwalztemperatur beträgt nicht weniger als 900 °C, das Walzkompressionsverhältnis beträgt ≥ 2, langsames Abkühlen nach dem Walzen;
(4) Walzen: Erwärmen des Zwischenknüppels in einem Ofen zum Austenitisieren, eine Walzanlauftemperatur wird auf 1000 °C-1100 °C geregelt und eine Endwalztemperatur ist nicht niedriger als 950 °C, das Walzkompressionsverhältnis beträgt ≥ 6, um Stäbe mit einem Durchmesser φ ≤ 70 mm zu erhalten, die Stäbe werden zum Kühlen gestapelt und in einer Grube für mehr als 24 Stunden langsam abgekühlt:
(5) Veredeln und Richten;
(6) Abschreck- und Anlassbehandlung: Abschrecken + Anlassen, wobei die Abschreckerwärmungstemperatur 850-950 °C beträgt, die Ofenzeit 100-300 Min. beträgt, Wasserabschrecken mit einem Abschreckring verwendet wird und die Wassertemperatur auf 20-30 °C geregelt wird; die Anlasserwärmungstemperatur 550-650 °C beträgt, die Ofenzeit 200-300 Min. beträgt, Entnehmen aus dem Ofen und anschließend Kühlen in Luft auf Raumtemperatur;
(7) Glühen: Spannungsarmglühen wird durchgeführt, um innere Spannungen nach dem Abschrecken und Anlassen zu beseitigen, die Glühtemperatur beträgt 400-500 °C und die Haltezeit beträgt ≥ 3 Std., Abkühlen auf Raumtemperatur in dem Ofen und anschließend Entnehmen aus dem Ofen
(8) Entzundern + Erkennen von Oberflächenmängeln.

2. Herstellungsverfahren für den Stahl für Kugelspindellager nach Anspruch 1, wobei in Schritt (1) das Schmelzen von geschmolzenem Stahl, hochwertigem geschmolzenem Eisen oder Stahlschrott verwendet wird, um den Gehalt an schädlichen Elementen in geschmolzenem Stahl zu reduzieren.

3. Herstellungsverfahren für den Stahl für Kugelspindellager nach Anspruch 1, wobei der Schritt (2) darin besteht, den geschmolzenen Stahl zu einem quadratischen Knüppel strangzugießen, der Stranggießprozess elektromagnetische Rühr- und Soft-Reduction-Technologie anwendet und überhitzungsarmes Gießen anwendet, die Überhitzung des Zwischenbehälters 15-35 °C beträgt, die Stranggießgeschwindigkeit 0,45-0,75 m/Min. beträgt und die Menge an sekundärem Kühlwasser für das Stranggießen 0,10-0,30 l/kg beträgt.

4. Herstellungsverfahren für den Stahl für Kugelspindellager nach Anspruch 1, wobei der quadratische Knüppel, nachdem er in Schritt (3) zu einem Zwischenknüppel gewalzt wurde, zum langsamen Abkühlen in die Grube eintritt, die Grubentemperatur nicht weniger als 500 °C beträgt und die langsame Kühlzeit mehr als 48 Stunden beträgt.

5. Verfahren nach Anspruch 1, wobei in Schritt (4) Erwärmen des Zwischenknüppels in dem Ofen: die Temperatur des Vorheizabschnitts auf 600-900 °C geregelt wird, die Temperatur des Erwärmungsabschnitts auf 1000-1150 °C geregelt wird und die Temperatur des Einweichabschnitts auf 1100-1200 °C geregelt wird; um sicherzustellen, dass der Knüppel vollständig und gleichmäßig erwärmt ist, beträgt die Gesamterwärmungszeit mehr als 2 Stunden.

## Revendications

1. Procédé permettant la production d'un acier pour palier à roulement à billes,
ledit acier contenant les constituants d'alliage suivants en pourcentage massique, C : 0,45-0,60 %, Si : 0,15-0,40 %, Mn : 0,50-0,80%, Cr : 0,15-0,40%, B : 0,002-0,006 %, V : 0,02-0,07 %, S ≤ 0,015 %, P ≤ 0,025 %, Mo ≤ 0,10 %, Al ≤ 0,08 %, Ca ≤ 0,0010 %, O ≤ 0,0010 %, As ≤ 0,04 %, Sn ≤ 0,03 %, Sb ≤ 0,005 %, Pb ≤ 0,002 %, le reste étant du Fe et des impuretés inévitables ;
ledit acier satisfaisant aux propriétés suivantes : lorsque l'acier est une barre, la dureté de surface de la barre satisfait à 220-260 HBW, la structure métallographique de la barre est une structure de sorbite, et la taille des grains d'austénite de la barre est ≥ grade 7 ; la limite d'élasticité de la barre est de 600-800 MPa, la résistance à la traction est de 800-900 MPa, et l'allongement est ≥ 15 % ;
le procédé comprenant les étapes suivantes :
(1) fusion d'acier fondu : raffinage primaire dans un four électrique ou un convertisseur - raffinage LF à l'extérieur du four - dégazage sous vide VD ou RH,
dans le processus de raffinage LF, renforcement de la désoxydation, ajout des poudres de SiC en lots pour effectuer la désoxydation par diffusion, introduction des fils d'Al pour effectuer la précipitation et la désoxydation, pour former des scories blanches dès que possible, et maintien des scories blanches pendant plus de 25 min ; ajout du fer B avant la fin du raffinage LF, et soufflage doux de l'argon pendant plus de 3 min ;
ladite teneur en C à un point final de la fusion primaire étant régulée à 0,10-0,25%, et le P au point final étant ≤ 0,020%, la teneur en O étant indirectement régulée pour être inférieure à 100 ppm par la régulation de la teneur en C à l'aide de la relation entre C et O dans l'acier fondu ;
durant le dégazage sous vide VD/RH, lorsque le degré de vide est inférieur à 133 Pa, le temps de maintien étant supérieur à 10 min ; après la rupture du vide, soufflage de l'argon et soufflage doux pendant plus de 20 min ;
(2) moulage de billettes : coulage d'acier fondu en billettes ;
(3) dégrossissage de billette : dégrossissage de la billette en une billette intermédiaire, introduction de la billette dans un four de chauffage pour le chauffage, la température d'introduction de la billette étant supérieure à 600°C, la température de chauffage étant 1200°C-1240°C, et le temps de chauffage total n'étant pas inférieur à 3 heures, une température de laminage de début étant 1050-1150°C, et une température de laminage final n'étant pas inférieure à 900°C, le taux de compression de laminage étant ≥ 2, refroidissement lent après laminage ;
(4) laminage : chauffage de la billette intermédiaire dans un four pour l'austénitisation, une température de démarrage de laminage étant régulée à 1000°C-1100°C, et une température de laminage final n'étant pas inférieure à 950°C, le taux de compression de laminage étant ≥ 6, de façon à obtenir des barres de diamètre φ ≤ 70 mm, lesdites barres étant empilées pour le refroidissement, et refroidies lentement dans une fosse pendant plus de 24 heures :
(5) finition et redressage ;
(6) traitement de trempe et de revenu : trempe + revenu, ladite température de chauffage de trempe étant 850-950°C, la durée au four étant de 100-300 min, la trempe à l'eau avec un anneau de trempe étant utilisée, et la température de l'eau étant régulée à 20-30°C ; la température de chauffage de revenu étant 550-650°C, la durée au four étant 200-300 min, le retrait du four, et ensuite le refroidissement à l'air jusqu'à la température ambiante ;
(7) recuit : un recuit de détente étant effectué pour éliminer les contraintes internes après trempe et revenu, la température de recuit étant 400-500°C et le temps de maintien étant ≥ 3 h, refroidissement à température ambiante dans le four et ensuite retrait du four ;
(8) détartrage + détection des défauts de surface.

2. Procédé permettant la production de l'acier pour palier à roulement à billes selon la revendication 1, à l'étape (1), la fusion de l'acier fondu, du fer fondu de haute qualité ou de la ferraille étant utilisée pour réduire la teneur en éléments nocifs de l'acier fondu.

3. Procédé permettant la production de l'acier pour palier à roulement à billes selon la revendication 1, ladite étape (2) étant constitué du coulage en continu de l'acier fondu en une billette carrée, ledit processus de coulage continue adoptant une technologie d'agitation électromagnétique et de réduction douce, et adoptant une coulée à faible surchauffe, la surchauffe du répartiteur étant 15-35°C, la vitesse de coulage continue étant de 0,45-0,75 m/min, et la quantité d'eau de refroidissement secondaire pour le coulage continue étant de 0,10-0,30 L/kg.

4. Procédé permettant la production de l'acier pour palier à roulement à billes selon la revendication 1, après le laminage de la billette carrée en une billette intermédiaire à l'étape (3), elle entre dans la fosse pour un refroidissement lent, la température de la fosse n'étant pas inférieure à 500°C, et le temps de refroidissement lent étant supérieur à 48 heures.

5. Procédé selon la revendication 1, à l'étape (4), ledit chauffage de la billette intermédiaire dans le four : la température de la section de préchauffage étant régulée à 600-900°C, la température de la section de chauffage étant régulée à 1000-1150°C, et la température de la section de trempage étant régulée à 1100-1200°C ; afin de s'assurer que la billette est entièrement et uniformément chauffée, le temps de chauffage total étant supérieur à 2 heures.
